# DEMANDE DE BREVET EUROPEEN

(11) **EP 3 223 206 A1**
(43) Date de publication de la demande: **27.09.2017**
(21) Numéro de dépôt: 17161858.0
(22) Date de dépôt: 20.03.2017
(51) Int. Cl.: G06Q 10/04, G06Q 50/06, F24D 11/00, F28F 27/00

(54) **PROCÉDÉ DE GESTION DE LA CONSOMMATION ÉNERGÉTIQUE D'UNE INSTALLATION THERMIQUE COMPRENANT AU MOINS UN DISPOSITIF DE STOCKAGE DE CHALEUR**

(30) Priorité: 21.03.2016 FR 1652395
(71) Demandeur: MULLER ET CIE, 75018 Paris (FR)
(72) Inventeur: LEBLANC, Alexandre, 75018 PARIS (FR); MORARD, Jean-Louis, 75018 PARIS (FR)
(74) Mandataire: Lavoix

(57) **Abrégé**

L'invention concerne un procédé de gestion (200) à un instant donné T₀ de la consommation énergétique d'une installation thermique d'au moins un local (111, 112, 113), l'installation thermique étant reliée à au moins un réseau d'un fournisseur d'énergie et éventuellement à au moins une source autonome d'énergie, l'installation thermique comprenant au moins un stockage d'énergie. Le procédé comprend :
- une étape d'estimation (210) de la puissance électrique consommée par l'installation thermique sur une période glissante [T₀, T₀+ΔT] ;
- une étape de mesure (220) de la quantité d'énergie stockée dans l'installation thermique à l'instant T₀ ;
- une étape de collecte (230) des informations tarifaires d'un ou plusieurs fournisseurs d'énergie sur la période [T₀, T₀+AT] ;
- une étape de détermination (240) d'un planning de charge et/ou de décharge d'énergie dans chaque stockage d'énergie sur la période [T₀, T₀+ΔT], à partir des étapes précédentes, permettant de minimiser le coût de la consommation énergétique sur cette période.

## Description

### DOMAINE TECHNIQUE DE L'INVENTION

Le domaine de l'invention est celui du chauffage.

Plus précisément, l'invention concerne un procédé de gestion de la consommation énergétique d'une installation thermique comprenant au moins un dispositif de stockage de chaleur.

L'invention trouve notamment des applications dans le domaine du bâtiment, pour la gestion du chauffage électrique d'un local et/ou pour la gestion d'un ballon d'eau chaude sanitaire.

### ETAT DE LA TECHNIQUE

Il est connu de l'art antérieur des techniques de gestion d'une installation thermique comprenant un dispositif de stockage de chaleur tel qu'un accumulateur d'un chauffage électrique ou un ballon d'eau chaude sanitaire.

Il existe par exemple une technique de gestion simple lorsque le dispositif de stockage de chaleur comprenant un relai contact sec est branché sur un réseau électrique comprenant deux tarifications horaires dont la plus avantageuse est dite « heures creuses ». Le dispositif de stockage est mis en route au début de la période « heures creuses » par la réception d'un signal émis par le fournisseur d'électricité au début de la période « heures creuses ».

Le principal inconvénient de cette technique de gestion est qu'elle ne peut tenir compte que de deux niveaux de tarifications d'énergie. Cette technique de gestion n'est ainsi pas adaptée à une grille tarifaire comportant de multiples variations au cours d'une journée.

En outre, cette technique n'est pas adaptée pour gérer plusieurs fournisseurs d'énergie pouvant être amenés à fournir de l'énergie à une même installation thermique.

D'autre part, la production électrique des fournisseurs d'énergie comporte de plus en plus une part de production aléatoire liée au développement des énergies renouvelables. Les énergies renouvelables telles que l'énergie éolienne, l'énergie photovoltaïque, étant fonction des conditions météorologiques peuvent entraîner un surplus de production d'électricité dans les périodes de faible demande.

Aucun des systèmes actuels ne permet de répondre simultanément à tous les besoins requis, à savoir de proposer une technique de gestion intelligente de la consommation énergétique d'une installation thermique, permettant notamment de minimiser le coût de fonctionnement ou d'absorber un surplus de production d'électricité.

### OBJET DE L'INVENTION

La présente invention vise à remédier à tout ou partie des inconvénients de l'état de la technique cités ci-dessus.

A cet effet, la présente invention vise un procédé de gestion à un instant donné T₀ de la consommation énergétique d'une installation thermique d'au moins un local, l'installation thermique étant reliée à au moins un réseau d'un fournisseur d'énergie et éventuellement à au moins une source autonome d'énergie, l'installation thermique comprenant au moins un stockage d'énergie.

L'installation thermique peut comprendre une installation de chauffage électrique, une installation de chauffage au fuel, une installation de chauffage au gaz, une installation d'eau chaude sanitaire électrique ou au gaz. L'installation thermique visée par le procédé de gestion comprend au moins un stockage d'énergie. Le stockage d'énergie peut être effectué sous la forme de chaleur sensible et/ou de chaleur latente. Le stockage d'énergie peut être formé par un matériau comportant une capacité thermique importante, comme par exemple un matériau réfractaire. Le stockage d'énergie peut également être formé par un matériau à changement de phase. Le stockage d'énergie peut également être effectué par un procédé chimique ou mécanique, comme par exemple un accumulateur lithium-ion, un volant d'inertie ou un stockage par air comprimé.

L'installation thermique est reliée à au moins un fournisseur d'énergie alimentant ladite installation. Concernant les fournisseurs d'électricité, la production électrique provient généralement de plusieurs sources comprenant par exemple de l'énergie nucléaire, de l'énergie thermique, de l'énergie éolienne, de l'énergie solaire, de l'énergie hydraulique. L'installation thermique peut également être reliée à une source autonome de production d'énergie comme par exemple une éolienne, un panneau photovoltaïque, un chauffe-eau solaire.

Selon l'invention, le procédé comprend :
- une étape d'estimation de la consommation d'énergie instantanée de l'installation thermique sur une période glissante [T₀, T₀+ΔT] ;
- une étape de mesure de la quantité d'énergie stockée dans l'installation thermique à l'instant T₀ ;
- une étape de collecte des informations tarifaires d'un ou plusieurs fournisseurs d'énergie sur la période [T₀, T₀+ΔT] ;
- une étape de détermination d'un planning de charge et/ou de décharge d'énergie dans chaque stockage sur la période [T₀, T₀+ΔT] permettant de minimiser le coût de la consommation énergétique sur cette période.

Ainsi, le procédé de gestion détermine les périodes optimales pour stocker de l'énergie dans l'installation thermique et/ou pour décharger l'énergie stockée vers l'installation thermique ou vers un des fournisseurs d'énergie. Le planning est déterminé en fonction de la consommation prévisionnelle du logement, de la quantité d'énergie stockée dans l'installation et des tarifs prévisionnels des différents fournisseurs d'énergie alimentant le local. Le planning de charge et/ou de décharge d'énergie dans chaque stockage d'énergie sur la période [T₀, T₀+ΔT] est par conséquent déterminé à partir des étapes précédentes.

Il convient de souligner que l'estimation de la consommation d'énergie instantanée de l'installation thermique correspond en fait à l'estimation de la puissance électrique consommée par l'installation thermique.

Dans des modes de réalisation préférentiels de l'invention, l'étape d'estimation comprend les sous-étapes suivantes :
- enregistrement de la consommation instantanée réelle de l'installation thermique sur une période [T0- ΔTb ; T0], antérieur à T0 ;
- enregistrement de la température intérieure et/ou de la température extérieure du local sur la même période antérieure [T0- ΔTb ; T0].

Dans des modes de réalisation particuliers de l'invention, le procédé comprend en outre une étape de stockage de l'énergie dans l'installation thermique et/ou de déchargement de l'énergie stockée vers l'installation thermique ou vers un des fournisseurs d'énergie, en fonction du planning de charge et/ou de décharge d'énergie.

Dans des modes de réalisation particuliers de l'invention, le procédé comprend également une étape de collecte du planning prévisionnel des périodes ouvertes au chargement déterminées par un ou plusieurs fournisseurs d'énergie sur la période [T₀, T₀+ΔT], ladite étape étant effectuée avant l'étape de détermination d'un planning de charge et/ou de décharge d'énergie dans chaque stockage sur la période [T₀, T₀+ΔT].

Ainsi, les fournisseurs d'énergie indiquent quelles sont les périodes ouvertes à la fourniture d'énergie pour les stockages de l'installation thermique. Ces périodes sont déterminées à l'avance par les fournisseurs d'énergie et peuvent correspondre à des prévisions de surplus de production électrique

Dans des modes de réalisation particuliers de l'invention, le procédé comprend également une étape d'enregistrement de la consommation instantanée réelle de l'installation thermique sur une période [T₀-ΔT_{b} ; T₀], antérieure à T₀.

Ainsi, des statistiques peuvent être effectuées selon le type de jours, différenciant par exemple la consommation énergétique lors des jours ouvrés et la consommation énergétique lors des jours non ouvrés.

Dans des modes de réalisation particuliers de l'invention, le procédé comprend également une étape d'enregistrement de la température intérieure et/ou de la température extérieure du local sur la même période antérieure [T₀-ΔT_{b} ; T₀].

Dans des modes de réalisation particuliers de l'invention, l'étape d'estimation de la consommation instantanée de l'installation thermique comprend une sous-étape de modélisation de la consommation instantanée antérieure au cours de chaque cycle, la modélisation étant basée sur les enregistrements de la consommation réelle, voire d'au moins une température enregistrée.

Ainsi, l'estimation de la consommation énergétique future se base sur un modèle prenant en compte les statistiques des consommations réelles. Le modèle peut également prendre en compte les températures intérieures et extérieures du local. Le cycle peut être égal par exemple à une demi-journée, à une journée ou à plusieurs jours.

Dans des modes de réalisation particuliers de l'invention, l'étape d'estimation de la consommation instantanée de l'installation thermique comprend une sous-étape de collecte d'informations météorologiques à l'instant T₀ et/ou de prévisions météorologiques sur la période [T₀, T₀+ΔT].

Ainsi, les informations météorologiques peuvent être une température intérieure au local, une température extérieure au local, une direction et une force du vent, une intensité lumineuse, une hygrométrie ou une pression atmosphérique. Ces informations météorologiques peuvent être fournies par une centrale météorologique présente dans le local, voire par un fournisseur distant. Les prévisions météorologiques sont généralement fournies par un météorologiste qui indique sur une période future l'évolution des températures, de l'ensoleillement et du vent.

Dans des modes de réalisation particuliers de l'invention, l'étape d'estimation de la consommation instantanée de l'installation thermique comprend une sous-étape de collecte de la température intérieure et/ou extérieure de chaque local ou de l'ensemble des locaux à l'instant T₀.

Dans des modes de réalisation particuliers de l'invention, l'étape d'estimation de la consommation instantanée de l'installation thermique comprend une sous-étape de collecte d'informations concernant la surface et la hauteur sous plafond de chaque local ou de l'ensemble des locaux.

Ainsi, l'estimation de la consommation énergétique future prenant en compte les dimensions du local est plus précise.

Dans des modes de réalisation particuliers de l'invention, l'étape d'estimation de la consommation instantanée de l'installation thermique comprend une sous-étape d'estimation du coefficient de déperdition thermique volumique de chaque local ou de l'ensemble des locaux.

Ainsi, le coefficient de déperdition thermique volumique représentant les pertes thermiques du local peut être utilisé dans un modèle d'estimation de la consommation énergétique future.

Dans des modes de réalisation particuliers de l'invention, l'étape d'estimation de la consommation instantanée de l'installation thermique comprend une sous-étape de collecte de l'état d'ouverture d'une fenêtre éventuellement comprise dans un local.

Ainsi, l'estimation des besoins énergétiques du local prend en compte des déperditions liées à l'ouverture éventuelle d'une fenêtre.

Dans des modes de réalisation particuliers de l'invention, l'étape d'estimation de la consommation instantanée de l'installation thermique comprend une sous-étape de collecte de l'état d'occupation du ou des locaux sur une période antérieure [T₀-ΔT_{b} ; T₀].

Ainsi, l'estimation des besoins énergétiques aboutit à une valeur plus importante lorsqu'une personne est détectée dans le local dans une période antérieure à T₀, que lorsque personne n'est détecté dans le local sur la même période.

Dans des modes de réalisation particuliers de l'invention, le procédé comprend également une étape de transmission d'informations liées à l'installation thermique à au moins un fournisseur d'énergie, lesdites informations étant comprise parmi:
- un planning prévisionnel de chargement sur la période [T₀, T₀+ΔT] ;
- un planning prévisionnel de stockage disponible sur la période [T₀, T₀+ΔT].

Ainsi, le fournisseur d'énergie connaissant les plannings prévisionnels de l'installation thermique peut prévoir la demande énergétique et adapter sa production énergétique en conséquence.

Dans des modes de réalisation particuliers de l'invention, le procédé comprend également une étape d'estimation de la production énergétique future de chaque source autonome d'énergie.

Dans des modes de réalisation particuliers de l'invention, une des sources autonomes d'énergie est un des dispositifs de production d'énergie suivants :
- panneau photovoltaïque ;
- éolienne ;
- générateur électrique à combustion ;
- générateur électrique à cycle thermodynamique ;
- chauffe-eau solaire.

### BREVE DESCRIPTION DES FIGURES

D'autres avantages, buts et caractéristiques particulières de la présente invention ressortiront de la description non limitative qui suit d'au moins un mode de réalisation particulier des procédés objets de la présente invention, en regard des dessins annexés, dans lesquels :
- la figure 1 représente une vue en plan d'un logement couvert par une installation thermique ;
- la figure 2 illustre sous la forme d'un schéma synoptique un procédé de gestion de la consommation énergétique d'une installation thermique.

### DESCRIPTION DETAILLEE DE MODES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier de l'invention

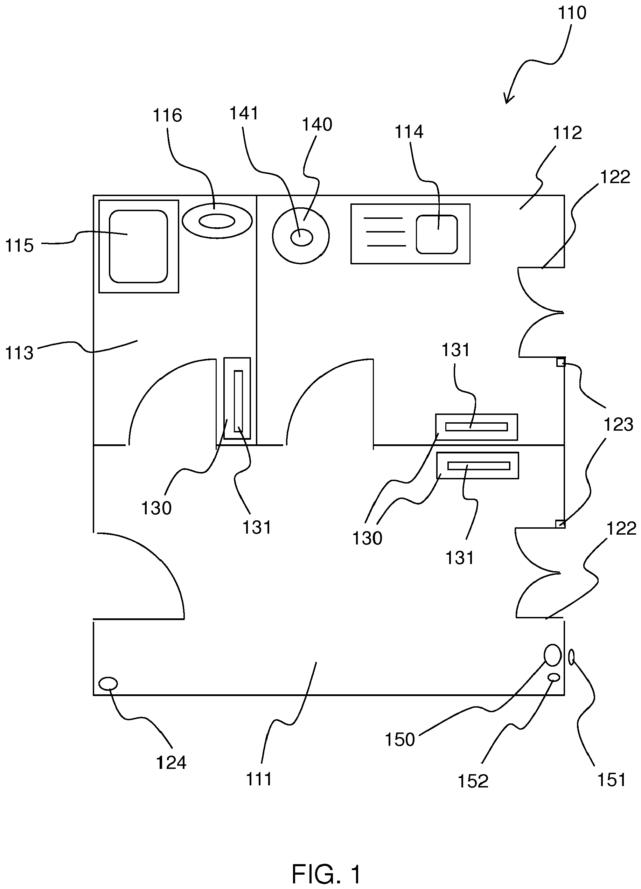

La figure 1 représente une vue en plan d'un logement 110 comprenant une pièce principale 111, une cuisine 112 et une salle d'eau 113. La pièce principale 111 et la cuisine 112 comprennent chacune une fenêtre 122 munie d'un détecteur d'ouverture 123. Un détecteur de présence à infrarouge 124 est fixé dans un coin de la pièce principale 111.

Les trois pièces du logement 110 sont couvertes par une installation thermique qui comprend dans chacune des pièces un radiateur électrique 130 à accumulation. Chaque radiateur électrique 130 comprend ainsi un accumulateur de chaleur 131 formé dans un matériau réfractaire, comme par exemple une brique réfractaire.

L'accumulateur de chaleur 131 stocke la chaleur pendant une période déterminée, correspondant par exemple à une période avantageuse du tarif de l'électricité, et la restitue le reste du temps. Il convient de noter que le stockage s'effectue sous la forme de chaleur sensible en augmentant la température du matériau réfractaire qui comporte une forte capacité calorifique.

Dans des variantes de ce mode de réalisation particulier de l'invention, le détecteur d'ouverture 123 et/ou le détecteur de présence à infrarouge 124 peuvent être intégrés aux radiateurs électriques 130 à accumulation.

L'installation thermique du logement 110 comprend également un ballon d'eau chaude sanitaire (ECS) 140 installé dans la cuisine 112 et permettant d'alimenter en eau chaude un évier 114 présent dans la cuisine 112, une douche 115 présente dans la salle d'eau 113 et un lavabo 116 également présent dans la salle d'eau 113.

Le ballon d'eau chaude 140 comprend un coeur de stockage 141 à matériau à changement de phase qui stocke la chaleur sous la forme de chaleur sensible et de chaleur latente. En effet, le matériau à changement de phase est choisi de telle sorte que la température de changement de phase soit sensiblement supérieure à la température d'utilisation de l'eau chaude. Dans le présent exemple, la température du ballon d'eau chaude sanitaire 140 est fixée à soixante degrés, la température de changement de phase est alors fixée par exemple à soixante cinq degrés afin de permettre un échange de chaleur entre le coeur de stockage 141 et l'eau du ballon 140.

L'installation thermique du logement 110 comprend ainsi, dans le présent exemple non limitatif de l'invention, quatre stockages thermiques 145 constitués par deux accumulateurs de chaleur 131, le ballon d'eau chaude 140 et un coeur de stockage 141 compris dans le ballon d'eau chaude 140.

Dans des variantes de ce mode de réalisation particulier de l'invention, l'installation thermique du logement 110 peut comprendre un stockage d'énergie sous la forme chimique ou mécanique, comme par exemple un accumulateur lithiumion, un volant d'inertie ou un stockage par air comprimé.

Par ailleurs, le logement 110 comprend une station météo 150 fournissant la température extérieure grâce à une sonde de température externe 151 fixée sur un mur extérieur du logement 110. La station météo 150 fournit également la température intérieure du logement grâce à une sonde de température interne 152 incluse dans la station météo 150. La station météo 150 est avantageusement reliée à une centrale de prévision météorologique distante fournissant une prévision météorologique sur les prochaines vingt-quatre heures.

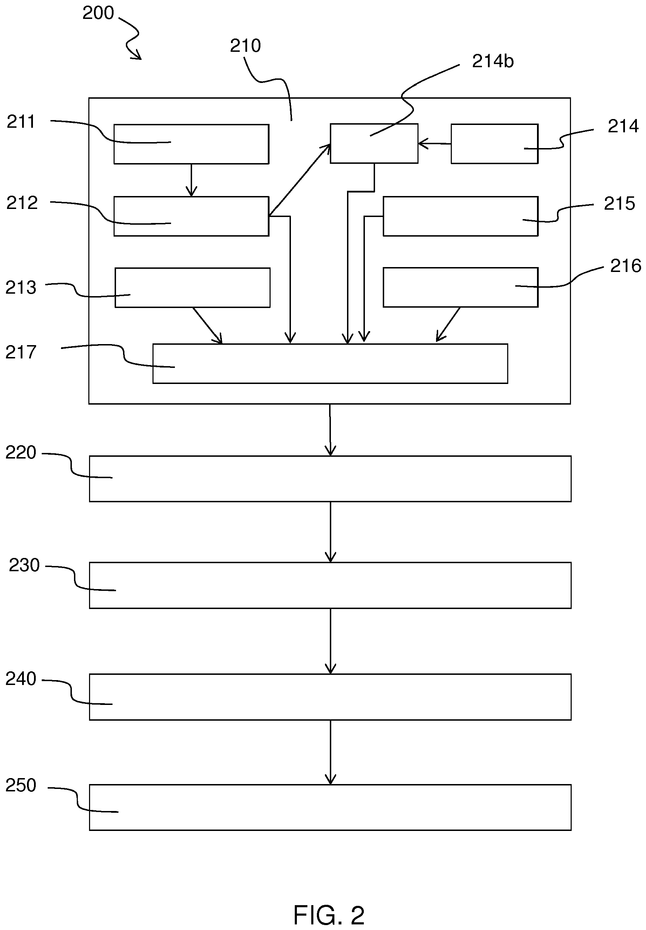

La figure 2 représente sous la forme d'un schéma synoptique un procédé de gestion 200 de la consommation énergétique de l'installation thermique 110 entre un l'instant T₀ et un instant T₀+ΔT. Dans le présent exemple, T₀ correspond à l'instant présent et ΔT est égal à vingt-quatre heures.

Le procédé de gestion 200 estime dans une première étape 210 la consommation énergétique de l'installation thermique à chaque instant sur les prochaines vingt-quatre heures. Une courbe estimative de la puissance électrique consommée en fonction du temps peut être tracée au cours de cette étape 210.

L'estimation de la consommation électrique future prend en compte à la fois la consommation électrique antérieure, les dimensions du logement 110, une prévision météorologique et les températures intérieures et extérieures du logement 110.

Ainsi, pour effectuer des statistiques sur la consommation électrique antérieure, l'étape d'estimation 210 comprend une sous-étape 211 d'enregistrement de la puissance consommée au cours des derniers jours, et des températures intérieures et extérieures du logement 110.

A partir de l'enregistrement de la puissance consommée, une modélisation de la consommation instantanée antérieure sur chaque journée est effectuée au cours d'une sous-étape 212. Cette modélisation différencie les jours ouvrés, typiquement du lundi au vendredi, et les jours non ouvrés, correspondant typiquement aux jours du week-end, c'est-à-dire au samedi et au dimanche. Ainsi, pour un instant donné d'un jour ouvré, la modélisation de la consommation instantanée calcule la moyenne de la consommation instantanée sur chacun des cinq derniers jours ouvrés audit instant.

De même, pour un instant donné d'un jour non ouvré, la modélisation de la consommation instantanée calcule la moyenne de la consommation instantanée sur chacun des cinq derniers jours non ouvrés audit instant.

Il convient de souligner que les jours ouvrés et non ouvrés peuvent être modifiés par l'utilisateur ou par un gestionnaire de cette installation thermique. Il peut également être prévu une modélisation identique pour chacun des jours de la semaine.

Dans des variantes de ce mode de réalisation particulier de l'invention, la modélisation de la consommation instantanée antérieure prend en compte la température extérieure du logement 110 pour proposer un modèle de la consommation instantanée antérieure au cours d'une journée ouvrée type et au cours d'une journée non ouvrée type, basée sur la température extérieure du logement 110.

L'étape d'estimation 210 comprend également une sous-étape 213 de collecte d'informations fournies par la station météo 150. Les informations collectées comprennent une prévision météorologique sur les prochaines vingt-quatre heures ainsi que les températures interne et externe du logement 110.

L'étape d'estimation 210 comprend également une sous-étape 214 de collecte d'informations concernant la surface de chaque pièce 120 du logement 110, ainsi que la hauteur sous plafond du logement 110. Un coefficient de déperdition volumique est calculé au cours d'une sous-étape 214b à partir des informations concernant les dimensions du logement 110 et des relevés effectués au cours de la sous-étape d'enregistrement 212.

L'étape d'estimation 210 comprend également une sous-étape 215 de collecte d'informations concernant l'ouverture des fenêtres 122 du logement 110.

En outre, l'étape d'estimation 210 comprend une sous-étape 216 de collecte d'informations concernant l'état d'occupation du logement 110. L'état occupé étant déterminé lorsque le détecteur 124 détecte la présence d'un individu à l'intérieur du logement 110 durant les dernières vingt-quatre heures.

A partir des informations collectées, l'étape d'estimation 210 calcule au cours d'une sous-étape 217 la consommation énergétique prévisionnelle instantanée au cours des prochaines vingt-quatre heures. L'étape d'estimation 210 prend ainsi en compte les informations météorologiques, les dimensions du logement 110, les relevés effectués au cours des derniers jours, l'état des fenêtres et l'état d'occupation du logement 110 présence d'un individu pour prévoir les besoins en chaleur au cours des prochaines vingt-quatre heures.

Après avoir estimé la consommation énergétique prévisionnelle au cours des prochaines vingt-quatre heures, le procédé de gestion 200 comprend une étape de mesure 220 de l'énergie stockée à l'instant T₀ dans chacun des stockages 145 présents : les accumulateurs de chaleur 131 et le coeur de stockage 141 du ballon d'eau chaude 140.

L'étape de mesure 220 permet ainsi de comparer la quantité d'énergie stockée avec les besoins énergétiques calculées au cours de l'étape d'estimation 210. Une estimation de la quantité d'énergie supplémentaire nécessaire pour le bon fonctionnement du chauffage du logement 110 et pour l'eau chaude sanitaire est ainsi effectuée.

Afin de déterminer le planning optimal pour charger et/ou décharger les stockages thermiques 145, le procédé de gestion 200 collecte lors d'une étape 230 des informations tarifaires au près des différents fournisseurs d'énergie alimentant le logement 110.

Il convient de souligner que ces informations tarifaires sont spécifiées à chaque instant des prochaines vingt-quatre heures et qu'elles sont fonction à la fois de la demande et de l'offre disponible. Les tarifs fournis par les fournisseurs d'énergie sont basés sur les capacités de production d'électricité des fournisseurs d'énergie, provenant de centrale thermique, nucléaire, hydraulique, éolienne ou solaire. Les productions d'électricité dite renouvelable étant sujettes aux aléas climatiques, les fournisseurs d'énergie basent leur tarif sur une estimation de la production établie à partir de prévision météorologique. En outre, les tarifs sont également établis en fonction de la demande.

Dans des variantes de ce mode de réalisation particulier de l'invention, le logement 110 est relié au moins une source autonome de production d'énergie. Cette source autonome peut être avantageusement renouvelable, comme par exemple une éolienne, un panneau photovoltaïque ou un chauffe-eau solaire installé sur le toit du logement 110. La production d'énergie électrique ou thermique est ainsi gratuite pour le logement 110. Une estimation de la production énergétique future de ces sources autonomes peut être établie à partir des prévisions météorologiques collectées au cours de la sous-étape 213.

Dans des variantes de ce mode de réalisation particulier de l'invention, les radiateurs 130 à accumulation de chaleur intègrent en complément un accumulateur d'énergie électrique chimique ou mécanique, comme par exemple une batterie Lithium-ion ou un stockage par air comprimé, pour assurer l'alimentation de leurs dispositifs de commande et d'alimentation et éventuellement compléter l'apport de chaleur de l'accumulateur thermique. Ces accumulateurs d'énergie électrique complémentaires peuvent également, en intégrant un onduleur, alimenter le réseau électrique du logement équipé.

A partir des besoins énergétiques de l'installation thermique identifiés au cours de l'étape d'estimation 210, des quantités d'énergie stockées mesurées au cours de l'étape 220, des grilles tarifaires établies sur les prochaines vingt-quatre heures collectées au cours de l'étape 230 et des plannings indiquant les périodes propices au chargement au cours de l'étape 240, le procédé de gestion 200 établit un planning optimal de charge et/ou de décharge pour chacun des stockages de chaleur 145 au cours de l'étape 240.

Le planning optimal de charge et/ou de décharge permet de minimiser le coût énergétique sur les prochaines vingt-quatre heures.

Il convient de souligner que la décharge de l'énergie stockée est généralement à destination de la consommation interne au logement. Néanmoins, l'énergie stockée peut également être revendu à l'un des fournisseurs d'énergie.

Dans des variantes de ce mode de réalisation particulier de l'invention, l'optimisation énergétique peut être effectuée sur une durée glissante à partir de l'instant T₀ pouvant aller jusqu'à cinq jours, voire même jusqu'à dix jours. Ainsi, dans le cas où les besoins énergétiques de l'installation thermique 110 sont importants dans les prochains jours, un stockage d'énergie est effectué avant ces consommations prévues, lorsque les tarifs sont avantageux.

Dans des variantes de ce mode de réalisation particulier de l'invention, le procédé de gestion 200 collecte également au près des différents fournisseurs d'énergie alimentant le logement 110, un planning prévisionnel des périodes ouvertes au chargement sur les prochaines vingt-quatre heures. Le planning optimal de charge et/ou de décharge pour chacun des stockages de chaleur 145 est déterminé au cours de l'étape 240 en tenant également compte des plannings indiquant les périodes propices au chargement. Une optimisation du coût énergétique est ainsi faite en tenant compte des contraintes de planning du ou des fournisseurs énergétiques. Il convient de souligner que les périodes ouvertes au chargement par les fournisseurs d'énergie permettent entre autres d'absorber les pics énergétiques liés à une surconsommation de la production énergétique.

Le procédé de gestion 200 comprend également une étape 250 de transmission d'informations liées à l'installation thermique aux fournisseurs d'énergie du logement 110. Ces informations comprennent un planning prévisionnel de la puissance énergétique liée au chargement sur les prochaines vingt-quatre heures, et un planning prévisionnel du stockage disponible au total et/ou dans les différents stockages thermiques 145 sur les prochaines vingt-quatre heures. Ces informations permettent entre autres aux fournisseurs d'énergie de mieux gérer leur production énergétique.

## Revendications

1. Procédé de gestion (200) à un instant donné T₀ de la consommation énergétique d'une installation thermique d'au moins un local (111, 112, 113), l'installation thermique étant reliée à au moins un réseau d'un fournisseur d'énergie et éventuellement à au moins une source autonome d'énergie, l'installation thermique comprenant au moins un stockage d'énergie (131, 141), **caractérisé en ce que** le procédé comprend :
- une étape d'estimation (210) de la puissance électrique consommée par l'installation thermique sur une période glissante [T₀, T₀+ΔT], comprenant :
- une sous-étape d'enregistrement (211) de la consommation instantanée réelle de l'installation thermique sur une période [T0- ΔTb ; T0], antérieur à T0 ; et
- une sous-étape d'enregistrement de la température intérieure et/ou de la température extérieure du local sur la même période antérieure [T0-ΔTb ; T0] ;
- une étape de mesure (220) de la quantité d'énergie stockée dans l'installation thermique à l'instant T₀ ;
- une étape de collecte (230) des informations tarifaires d'un ou plusieurs fournisseurs d'énergie sur la période [T₀, T₀+ΔT] ;
- une étape de détermination (240) d'un planning de charge et/ou de décharge d'énergie dans chaque stockage d'énergie sur la période [T₀, T₀+ΔT] à partir des étapes précédentes, permettant de minimiser le coût de la consommation énergétique sur cette période.

2. Procédé selon la revendication 1, **caractérisé en ce qu'**il comprend également une étape de collecte du planning prévisionnel des périodes ouvertes au chargement déterminées par un ou plusieurs fournisseurs d'énergie sur la période [T₀, T₀+ΔT], ladite étape étant effectuée avant l'étape de détermination d'un planning de charge et/ou de décharge d'énergie dans chaque stockage sur la période [T₀, T₀+ΔT].

3. Procédé selon l'une quelconque des revendications 1 à 2, **caractérisé en ce que** l'étape d'estimation de la consommation instantanée de l'installation thermique comprend une sous-étape de modélisation (212) de la consommation instantanée antérieure au cours de chaque cycle, la modélisation étant basée sur les enregistrements de la consommation réelle, voire d'au moins une température enregistrée.

4. Procédé selon l'une quelconque des revendications 1 à 3, **caractérisé en ce que** l'étape d'estimation de la consommation instantanée de l'installation thermique comprend une sous-étape (213) de collecte d'informations météorologiques et/ou de prévisions météorologiques sur la période [T₀, T₀+ΔT].

5. Procédé selon l'une quelconque des revendications 1 à 4, **caractérisé en ce que** l'étape d'estimation de la consommation instantanée de l'installation thermique comprend une sous-étape de collecte de la température intérieure et/ou extérieure de chaque local ou de l'ensemble des locaux à l'instant T₀.

6. Procédé selon l'une quelconque des revendications 1 à 5, **caractérisé en ce que** l'étape d'estimation de la consommation instantanée de l'installation thermique comprend une sous-étape (214) de collecte d'informations concernant la surface et la hauteur sous plafond de chaque local ou de l'ensemble des locaux.

7. Procédé selon l'une quelconque des revendications 5 à 6, **caractérisé en ce que** l'étape d'estimation de la consommation instantanée de l'installation thermique comprend une sous-étape (214b) d'estimation du coefficient de déperdition thermique volumique de chaque local ou de l'ensemble des locaux.

8. Procédé selon l'une quelconque des revendications 1 à 7, **caractérisé en ce que** l'étape d'estimation de la consommation instantanée de l'installation thermique comprend une sous-étape (215) de collecte de l'état d'ouverture d'une fenêtre éventuellement comprise dans un local.

9. Procédé selon l'une quelconque des revendications 1 à 8, **caractérisé en ce que** l'étape d'estimation de la consommation instantanée de l'installation thermique comprend une sous-étape (216) de collecte de l'état d'occupation du ou des locaux sur une période antérieure [T₀-ΔT_{b}; T₀].

10. Procédé selon l'une quelconque des revendications 1 à 9, **caractérisé en ce qu'**il comprend également une étape (250) de transmission d'informations liées à l'installation thermique à au moins un fournisseur d'énergie, lesdites informations étant comprise parmi :
- un planning prévisionnel de chargement sur la période [T₀, T₀+ΔT] ;
- un planning prévisionnel de stockage disponible sur la période [T₀, T₀+ΔT].

11. Procédé selon l'une quelconque des revendications 1 à 10, **caractérisé en ce qu'**il comprend également une étape d'estimation de la production énergétique future de chaque source autonome d'énergie.

12. Procédé selon l'une quelconque des revendications 1 à 11, **caractérisé en ce qu'**une des sources autonomes d'énergie est un des dispositifs de production d'énergie suivants :
- panneau photovoltaïque ;
- éolienne ;
- générateur électrique à combustion ;
- générateur électrique à cycle thermodynamique ;
- chauffe-eau solaire.
